# EUROPÄISCHE PATENTSCHRIFT

(11) **EP 0 868 275 B1**
(45) Veröffentlichungstag und Bekanntmachung des Hinweises auf die Patenterteilung: **02.02.2000**
(21) Anmeldenummer: 96944594.9
(22) Anmeldetag: 19.12.1996
(51) Int. Cl.: B29C 45/00, B29C 45/14, B29C 45/16

(54) **HERSTELLUNGSVERFAHREN FÜR EINEN GE- ODER VERBRAUCHSGEGENSTAND SOWIE GE- ODER VERBRAUCHSGEGENSTAND AUS BIOLOGISCH ABBAUBAREM UND/ODER KOMPOSTIERBAREM MATERIAL**
PRODUCTION PROCESS FOR A DAILY COMMODITY, AND DAILY COMMODITY MADE OF BIODEGRADABLE AND/OR COMPOSTABLE MATERIAL
PROCEDE DE FABRICATION D'UN OBJET USUEL OU DE CONSOMMATION COURANTE, ET OBJET DE CE TYPE EN UN MATERIAU BIODEGRADABLE ET/OU APTE AU COMPOSTAGE

(30) Priorität: 23.12.1995 DE 19548707
(43) Veröffentlichungstag der Anmeldung: 07.10.1998
(73) Patentinhaber: Mössner, Eugen Karl, D-79100 Freiburg (DE)
(72) Erfinder: Mössner, Eugen Karl, D-79100 Freiburg (DE)
(74) Vertreter: Patent- und Rechtsanwaltssozietät, Schmitt, Maucher & Börjes
(86) Internationale Anmeldenummer: EP9605706
(87) Internationale Veröffentlichungsnummer: WO9723334

(56) Entgegenhaltungen:
- EP-A- 0 614 741
- DE-B- 1 270 324
- DE-B- 1 529 799
- DE-B- 2 118 841
- US-A- 3 543 338
- PATENT ABSTRACTS OF JAPAN vol. 17, no. 133 (M-1383), 19.März 1993 & JP 04 311451 A (DAINIPPON PRINTING CO LTD), 4.November 1992,
- PATENT ABSTRACTS OF JAPAN vol. 17, no. 24 (P-1471), 18.Januar 1993 & JP 04 249247 A (KONICA CORP), 4.September 1992,
- PATENT ABSTRACTS OF JAPAN vol. 18, no. 636 (M-1715), 5.Dezember 1994 & JP 06 246767 A (SHOWA HIGHPOLYMER CO LTD), 6.September 1994,
- PATENT ABSTRACTS OF JAPAN vol. 7, no. 26 (P-172) [1171] , 2.Februar 1983 & JP 57 179972 A (MATSUSHITA DENKI SANGYO KK), 5.November 1982,

## Beschreibung

Die Erfindung betrifft ein Verfahren zur Herstellung eines Ge- oder Verbrauchsgegenstandes aus einem zumindest im wesentlichen biologisch abbaubaren und/oder kompostierbaren Material. Die Erfindung befaßt sich auch mit einem gemäß diesem Verfahren herstellbaren Ge- oder Verbrauchsgegenstand.

Bei praktisch allen Ge- oder Verbrauchsgegenständen besteht heute das Problem, daß diese nach Verlust ihrer Funktionsfähigkeit oder ihres Gebrauchszweckes entsorgt werden müssen. Um den mit der Entsorgung verbundenen Aufwand möglichst gering zu halten, hat man bereits Ge- oder Verbrauchsgegenstände geschaffen, die aus einem zumindest im wesentlichen biologisch abbaubaren und/oder kompostierbaren Material bestehen. Zur Entsorgung dieser vorbekannten Ge- oder Verbrauchsgegenstände müssen diese bloß noch einer Verrottung zugeführt werden, wodurch die Umwelt im Vergleich zu unverrottbaren Gegenständen nicht mehr wesentlich beeinträchtigt wird.

Insbesondere bei konstruktiven oder funktionserfüllenden Anwendungen sind diese vorbekannten Ge- oder Verbrauchsgegenstände häufig unbefriedigend, weil das biologisch abbaubare oder kompostierbare Material die gestellten Anforderungen nicht vollständig erfüllt. Darüberhinaus sind die vorbekannten Herstellungsverfahren aufgrund des hohen Materialaufwandes vergleichsweise kostenintensiv.

Aus der JP-A-4 311 451 ist ein Verfahren zur Herstellung eines Behälters aus biologisch abbaubarem Material bekannt, bei dem eine Folie aus biologisch abbaubarem Material in eine Form eingebracht wird und ihre beiden Enden mittels eines durch Einspritzen von biologisch abbaubarem Material geformten Stützkörpers miteinander vorbunden werden.

Es besteht daher insbesondere die Aufgabe, ein kostengünstiges Verfahren zur Herstellung eines Ge- oder Verbrauchsgegenstandes sowie einen solchen Gegenstand zu schaffen, der sich auch für konstruktive oder funktionserfüllende Anwendungen eignet.

Die erfindungsgemäße Lösung dieser Aufgabe besteht aus einem Verfahren der eingangs erwähnten Art bei dem zumindest ein strukturgebender, gitterförmiger und mechanisch belastbarer Formkörper hergestellt wird, der aus einem wenigstens im wesentlichen biologisch abbaubaren und/oder kompostierbaren Material oder Materialgemisch besteht, und bei dem der (die) Formkörper mit wenigstens einem Materialfilm oder einer Dünnschicht aus einem ebenfalls mindestens im wesentlichen biologisch abbaubaren und/oder kompostierbaren Material oder Materialgemisch verbunden wird, welcher bzw. welche den gitterförmigen Formkörper zur gewünschten Form des Ge- oder Verbrauchsgegenstandes vervollständigt.

Bei dem erfindungsgemäßen Verfahren werden die Ge- oder Verbrauchsgegenstände mittels einer Technologiekombination hergestellt, die eine besonders kostengünstige Produktion erlaubt. Dabei werden massive und als Formkörper ausgebildete Funktionselemente mit dünnschichtigen Teilen in einem oder zwei aufeinanderfolgenden Arbeitsgängen verbunden. Da nur die belastbaren strukturbildenden Formkörper als "dicke" gefüllte Materialstränge ausgeführt werden, ist das erfindungsgemäße Verfahren mit einem nur geringen Materialeinsatz verbunden. Dadurch können die Herstellungskosten bei dem erfindungsgemäßen Herstellungsverfahren wesentlich reduziert werden. Dennoch gewähren die in den Zwischenräumen der Gitterstruktur des Formkörpers vorgesehenen Dünnschichten oder Materialfilme beispielsweise den benötigten Staub- und Feuchteschutz. Da das im erfindungsgemäßen Verfahren hergestellte Kombiformteil immer als Ganzes biologisch abbaubar oder kompostierbar ist, gestaltet sich die Entsorgung der entsprechenden Ge- oder Verbrauchsgegenstände einfach und umweltschonend. Dabei ist die Zeitdauer der Abbaubarkeit über die jeweiligen Wandstärken und/oder Materialkombinationen in einem Zeitraum von beispielsweise acht Tagen bis zu zwei oder mehr Jahren einstellbar und für den jeweiligen Anwendungszweck optimierbar.

Das erfindungsgemäße Herstellungsverfahren eignet sich besonders für konstruktive beziehungsweise funktionserfüllende Verpackungs- und Transportsysteme, wie zum Beispiel für Anzuchttöpfe, Transport- und Displayverpackungen für Früchte in Form von Erdbeer-, Himbeer-, Heidelbeer- oder anderen Obstschalen, für tierhygienische Produkte wie Katzentoiletten oder für transportsichere Verpackungen für Lampen, Leuchtstoffröhren, Glasprodukte und andere bruchgefährdete Ge- oder Verbrauchsgegenstände. Dabei kann es vorteilhaft sein, wenn der Formkörper aus thermoplastischem Material in einem zumindest zweiteiligen Spritzwerkzeug hergestellt wird, und wenn nach dem Ausspritzen und Ausformen des Formkörpers das Werkzeug geringfügig auseinander gefahren wird, um in dem derart gebildeten Zwischenraum des Spritzwerkzeuges einen den gitterförmigen Formkörper zur gewünschten Form des Ge- oder Verbrauchsgegenstandes vervollständigenden Materialfilm einzuspritzen.

Dabei kann es je nach Applikation vorteilhaft sein, wenn die Werkzeugteile des mehrteiligen Spritzwerkzeuges derart auseinander gefahren werden, daß ein 15µ bis 80µ dicker Zwischenraum entsteht.

Eine andere vorteilhafte Verfahrensweise gemäß der Erfindung sieht vor, daß der Ge- oder Verbrauchsgegenstand in einem zumindest zweiteiligen Spritzwerkzeug hergestellt wird, und daß dazu ein Film- oder Folienstück in das Werkzeug eingelegt und darin anschließend mit dem strukturgebenden Formkörper umspritzt wird. Dabei ist es zweckmäßig, wenn das Film- oder Folienstück vor dem Einlegen in das Spritzwerkzeug etwa in die erforderliche Form gebracht wird.

Der Formkörper wird bevorzugt aus einem thermoplastisch verarbeitbaren, biologisch abbaubaren und/oder kompostierbaren Material, insbesondere aus Kunststoff, oder aus einem mit biologisch abbaubaren und/oder kompostierbaren Füllstoffen, insbesondere mit solchen Füllstoffen angereichertem Kunststoffmaterial, hergestellt.

Bei dem Materialfilm ist es zweckmäßig, wenn dieser insbesondere aus einem biologisch abbaubaren oder kompostierbaren Kunststoffmaterial bestehende Materialfilm oder die Dünnschicht aus einem spritztechnische verarbeitbaren thermoplastischen Material oder aus einem thermoplastischen Folienmaterial hergestellt wird.

Die erfindungsgemäße Lösung bei dem Ge- oder Verbrauchsgegenstand der eingangs erwähnten Art besteht darin, daß dieser zumindest einen strukturgebenden, gitterförmigen und mechanisch belastbaren Formkörper aus einem im wesentlichen biologisch abbaubaren und/oder kompostierbaren Material oder Materialgemisch aufweist, und daß der (die) gitterförmige(n) Formkörper mit wenigstens einem Materialfilm oder einer Dünnschicht aus einem ebenfalls mindestens im wesentlichen biologisch abbaubaren und/oder kompostierbaren Material oder Materialgemisch verbunden ist, welcher beziehungsweise welche den gitterförmigen Formkörper zur gewünschten Form des Ge- oder Verbrauchsgegenstandes vervollständigt beziehungsweise vervollständigen.

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: einen aus einem zumindest im wesentlichen biologisch abbaubaren und/oder kompostierbaren Material bestehenden Anzuchttopf in einer perspektivischen Darstellung, der einen strukturgebenden, gitterförmigen und mechanisch belastbaren Formkörper aufweist,
- Fig. 2: den Formkörper des Anzuchttopfes aus Fig. 1 in einem versetzten Längsschnitt,
- Fig. 3: den Formkörper des Anzuchttopfes aus Fig. 1 und 2 in einem Querschnitt im Bereich des Topfbodens,
- Fig. 4: den Topfboden ein einem Teil-Längsschnitt und in der Schnittebene B-B aus Fig. 3.

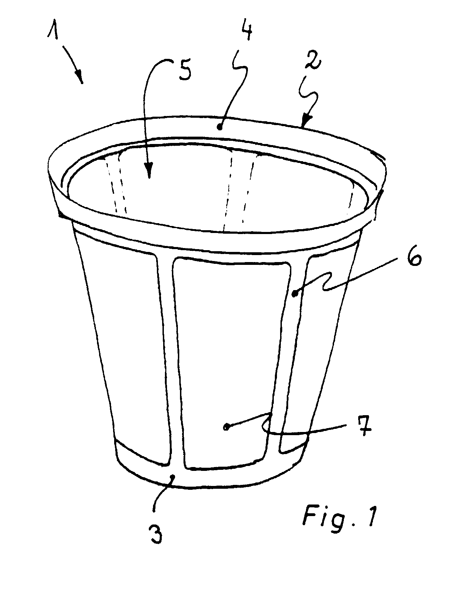

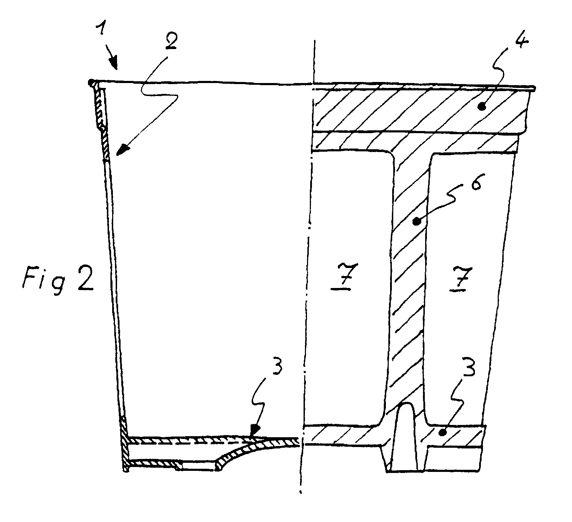

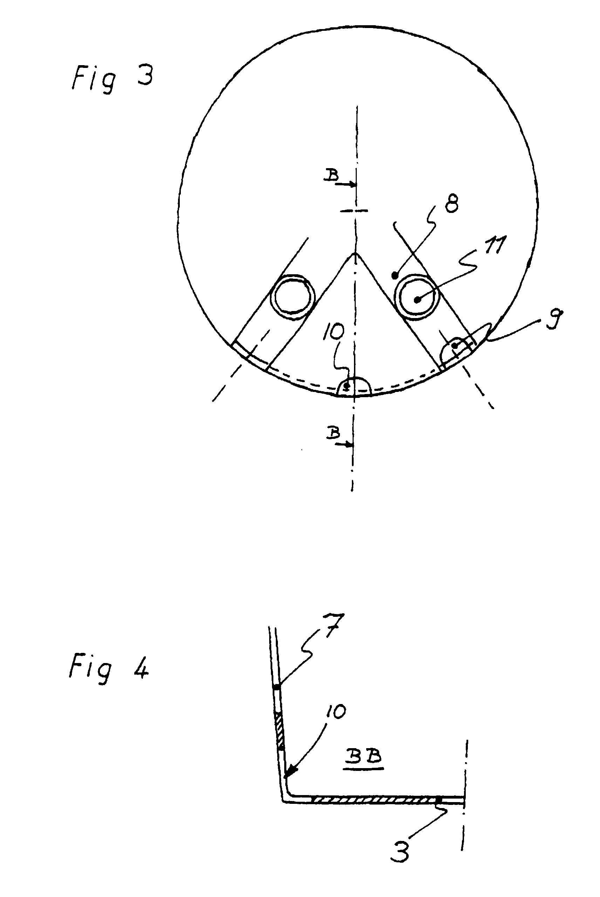

In den Fig. 1 bis 4 ist ein Ge- oder Verbrauchsgegenstand dargestellt, der hier als Anzuchttopf 1 ausgebildet ist. Der Anzuchttopf 1 weist einen belastbaren strukturbildenden Formkörper 2 auf, welcher einen unteren Topfboden 3 sowie einen oberen Topfrand 4 hat. Der Topfrand 4 begrenzt eine Topföffnung 5. Topfboden 3 und Topfrand 4 weisen hier einen im wesentlichen runden Querschnitt auf. Dabei sind der Topfboden 3 und der Topfrand 4 über fünf voneinander gleichmäßig beabstandete Rippen 6 miteinander verbunden, die umfangsseitig angeordnet sind und dem Formkörper eine Gitterstruktur geben.

Der zwischen jeweils zwei benachbarten Rippen gebildete Zwischenraum ist mit einem hier nicht weiter erkennbaren, aber durch das Bezugszeichen 7 angedeuteten Materialfilm oder Folienmaterial ausgelegt oder überdeckt, der die gewünschte Form dieses Gebrauchsgegenstandes vervollständigt.

Am Topfboden des Formkörpers 2 sind die in Längsrichtung orientierten Rippen 6 als radiale Verstärkungsholme 8 fortgeführt, welche jeweils als Querschnittsverdickung des Topfbodens 3 ausgebildet sind. Die Verstärkungsholme 8 laufen von den Rippen 6 etwa radial auf den Topfboden-Mittelpunkt zu.

Im Verbindungsbereich zwischen dem Umfangsmantel des Anzuchttopfes 1 einerseits und dem Topfboden 3 andererseits sind Drainage-Öffnungen 9 vorgesehen, die als Durchbrüche der Verstärkungsholme ausgebildet sind. Weitere Drainage-Öffnungen sind zum einen in dem erwähnten Verbindungsbereich zwischen den benachbarten Verstärkungsholmen (vgl. Bezugszeichen 10) und zum anderen ebenfalls auf den Verstärkungsholmen 8 in einer gegenüber den Durchbrüchen 9 radial nach innen versetzten Anordnung (vgl. Bezugszeichen 11) vorgesehen.

Der Topfboden 3 ist innerhalb seines durch Drainage-Öffnungen 11 begrenzten Zentralbereiches etwa konkav nach innen eingezogen.

Der Anzuchttopf 1 kann in zwei verschiedenen Verfahren hergestellt werden:

So ist es möglich, daß der strukturgebende, mechanisch belastbare Formkörper 2 des Gebrauchsgegenstandes zunächst als Gitterstruktur in ein Spritzwerkzeug entsprechend bekannter thermoplastischer Spritzverfahren eingebracht wird. Danach wird das Spritzwerkzeug um einen Abstand "x" aufgefahren, damit sich zwischen den zunächst zusammenliegenden Werkzeugteilen ein dünner, vorzugsweise zwischen 15µ und 80µ starker Zwischenraum ergibt, in den dann der Materialfilm oder das Folienmaterial 7 derart eingespritzt werden kann, daß die Gitterform des Formkörpers 2 zur gewünschten Form des Anzuchttopfes 1 vervollständigt wird.

Ein anderes Verfahren gemäß der Erfindung sieht vor, daß in ein Spritzwerkzeug zunächst ein zuvor in die entsprechende Form gebrachtes Folienstück eingelegt wird. Danach wird dieses mit der gewünschten verstärkenden, gitterförmigen Struktur umspritzt.

Für die beiden oben beschriebenen Verfahren eignen sich folgende Materialien:
Für den struktur- und festigkeitsgebenden Formkörper sind dies insbesondere thermoplastisch verarbeitbare, biologisch abbaubare oder kompostierbare Werkstoffe und/oder solche, die mit biologisch abbaubaren oder kompostierbaren Füllstoffen angereichert sind. Dies können auch abbaubar modifizierte Kunststoffe oder abbaubar modifizierte gefüllte Kunststoffe sein.

Für die formgebenden Dünnschichtteile oder Folien eignen sich solche Materialien, die thermoplastisch spritztechnisch verarbeitbar sind oder aus denen sich thermoplastische Folien herstellen lassen. Dies können auch abbaubar modifizierte Kunststoffe sein.

Die oben beschriebenen Verfahren erlauben die kostengünstige Herstellung der verschiedensten Ge- oder Verbrauchsgegenstände zum ein- oder mehrmaligen Gebrauch, wobei deren Entsorgung im wesentlichen durch Kompostierung oder durch biologischen Abbau erfolgen kann.

## Patentansprüche

1. Verfahren zur Herstellung eines Ge- oder Verbrauchsgegenstandes aus einem zumindest im wesentlichen biologisch abbaubaren und/oder kompostierbaren Material, wobei zumindest ein strukturgebender, gitterförmiger und mechanisch belastbarer Formkörper (2) hergestellt wird, der aus einem wenigstens im wesentlichen biologisch abbaubaren und/oder kompostierbaren Material oder Materialgemisch besteht, und wobei der (die) Formkörper (2) mit wenigstens einem Materialfilm (7) oder einer Dünnschicht aus einem ebenfalls mindestens im wesentlichen biologisch abbaubaren und/oder kompostierbaren Material oder Materialgemisch verbunden wird, welcher (7) beziehungsweise welche den gitterförmigen Formkörper (2) zur gewünschten Form des Ge- oder Verbrauchsgegenstandes (1) vervollständigt.

2. Verfahren nach Anspruch 1, dadurch gekennzeichnet, daß der Formkörper (2) aus thermoplastischem Material in einem zumindest zweiteiligen Spritzwerkzeug hergestellt wird, und daß nach dem Ausspritzen und Ausformen des Formkörpers (2) das Werkzeug geringfügig auseinander gefahren wird, um in dem derart gebildeten Zwischenraum des Spritzwerkzeuges einen den gitterförmigen Formkörper (2) oder die Formkörper zur gewünschten Form des Ge- oder Verbrauchsgegenstandes vervollständigenden Materialfilm (7) oder dergleichen einzuspritzen.

3. Verfahren nach Anspruch 1 oder 2, dadurch gekennzeichnet, daß die Werkzeugteile des Spritzwerkzeuges derart auseinander gefahren werden, daß ein 15µ bis 80µ dicker Zwischenraum entsteht.

4. Verfahren nach einem der Ansprüche 1 bis 3, dadurch gekennzeichnet, daß der Ge- oder Verbrauchsgegenstand in einem zumindest zweiteiligen Spritzwerkzeug hergestellt wird, und daß dazu ein Film- oder Folienstück in das Werkzeug eingelegt und darin anschließend mit dem strukturgebenden Formkörper (2) umspritzt wird.

5. Verfahren nach einem der Ansprüche 1 bis 4, dadurch gekennzeichnet, daß das Film- oder Folienstück vor dem Einlegen in das Spritzwerkzeug in die erforderliche Form gebracht wird.

6. Verfahren nach einem der Ansprüche 1 bis 5, dadurch gekennzeichnet, daß der Formkörper aus einem thermoplastisch verarbeitbaren, biologisch abbaubaren und/oder kompostierbaren Material, insbesondere aus Kunststoff, oder aus einem mit biologisch abbaubaren und/oder kompostierbaren Füllstoffen angereicherten Materialgemisch, insbesondere einem mit solchen Füllstoffen angereicherten Kunststoffmaterial, hergestellt wird.

7. Verfahren nach einem der Ansprüche 1 bis 6, dadurch gekennzeichnet, daß der insbesondere aus einem biologisch abbaubaren oder kompostierbaren Kunststoffmaterial bestehende Materialfilm (7) oder die Dünnschicht aus einem spritztechnisch verarbeitbaren thermoplastischen Material oder aus einem thermoplastischen Folienmaterial hergestellt wird.

8. Ge- oder Verbrauchsgegenstand, herstellbar durch das Verfahren nach einem der Ansprüche 1 bis 7, der zumindest einen strukturgebenden, gitterförmigen und mechanisch belastbaren Formkörper (2) aus einem im wesentlichen biologisch abbaubaren und/oder kompostierbaren Material oder Materialgemisch aufweist, wobei der (die) gitterförmige(n) Formkörper (2) mit wenigstens einem Materialfilm (7) oder einer Dünnschicht aus einem ebenfalls mindestens im wesentlichen biologisch abbaubaren und/oder kompostierbaren Material oder Materialgemisch verbunden ist, welcher (7) beziehungsweise welche den gitterförmigen Formkörper (2) oder die Formkörper zur gewünschten Form des Ge- oder Verbrauchsgegenstandes (1) vervollständigt beziehungsweise vervollständigen.

## Claims

1. Process for producing an everyday commodity or consumer item from an at least substantially biodegradable and/or compostable material, wherein at least one structural, grid-like and mechanically loadable shaped body (2) is produced which consists of at least one substantially biodegradable and/or compostable material or mixture of materials, and wherein the shaped body (bodies) (2) is (are) connected to at least one film (7) of material or a thin layer of another material or mixture of materials which is also at least substantially biodegradable and/or compostable, said film(s) or layer(s) (7) completing the grid-like shaped body (2) to produce the desired shape of the everyday commodity or consumer item (1).

2. Process according to claim 1, characterised in that the shaped body (2) is produced from thermoplastic material in an injection moulding tool in at least two parts, and in that after the injection-moulding and removal of the shaped body (2) the tool is pulled slightly apart in order that a material film (7) or the like can be injected in the interstice thus formed in the injection moulding tool which will complete the grid-like shaped body (2) or the shaped bodies to obtain the desired shape of the everyday commodity or consumer item.

3. Process according to claim 1 or 2, characterised in that the parts of the injection tool are pulled apart so as to form a gap 15µ to 80µ thick.

4. Process according to one of claims 1 to 3, characterised in that the everyday commodity or consumer item is produced in an injection moulding tool in at least two parts and in that for this purpose a piece of film or foil is placed in the tool and then moulding is carried out with the structural shaped body (2).

5. Process according to one of claims 1 to 4, characterised in that the piece of film or foil is formed into the required shape before being placed in the injection moulding tool.

6. Process according to one of claims 1 to 5, characterised in that the shaped body is made from a thermoplastically workable, biodegradable and/or compostable material, particularly plastics, or from a mixture of materials enriched with biodegradable and/or compostable material, particularly a plastics material enriched with fillers of this kind.

7. Process according to one of claims 1 to 6, characterised in that the material film (7) consisting in particular of a biodegradable or compostable plastics material, or the thin layer, is made from a thermoplastic material suitable for working by injection or from a thermoplastic film material.

8. Everyday commodity or consumer item capable of being produced by the process according to one of claims 1 to 7, which has at least one structural, grid-like and mechanically loadable shaped body (2) consisting of a substantially biodegradable and/or compostable material or mixture of materials, wherein the grid-like shaped body (bodies) (2) is (are) attached to at least one film (7) of material or a thin layer of a material or mixture of materials which is also at least substantially biodegradable and/or compostable, said film(s) or layer(s) (7) completing the grid-like shaped body (bodies) (2) to produce the desired shape of the everyday commodity or consumer item (1).

## Revendications

1. Procédé de fabrication d'un objet usuel ou de consommation courante d'un matériau au moins essentiellement biodégradable et/ou apte au compostage, selon lequel on produit au moins un corps moulé (2), conférant la structure, en forme de treillis et pouvant être chargé mécaniquement, qui est constitué d'un matériau ou d'un mélange de matériaux au moins essentiellement biodégrable et/ou apte au compostage, et selon lequel on relie le ou les corps moulés (2) à au moins un film (7) ou une couche mince constitué d'un matériau ou d'un mélange de matériaux qui est également au moins essentiellement biodégradable et/ou apte au compostage, film (7) ou couche mince qui complète le corps moulé (2) en forme de treillis en créant avec lui la forme désirée de l'objet usuel ou de consommation courante (1).

2. Procédé selon la revendication 1, caractérisé en ce qu'on produit le corps moulé (2) de matériau thermoplastique dans un moule pour injection qui est au moins en deux parties et que, après le moulage par injection et le démoulage du corps moulé (2), on écarte mutuellement les parties du moule dans une faible mesure pour injecter, dans l'espace intermédiaire ou interstice ainsi formé du moule pour injection, un film (7) ou analogue qui complète le corps moulé (2) en forme de treillis ou les corps moulés en forme de treillis en créant avec lui ou eux la forme désirée de l'objet usuel ou de consommation courante.

3. Procédé selon la revendication 1 ou 2, caractérisé en ce qu'on écarte mutuellement les parties du moule pour injection de manière que soit formé un interstice d'une largeur de 15 µm à 80 µm.

4. Procédé selon une des revendications 1 à 3, caractérisé en ce qu'on produit l'objet usuel ou de consommation courante dans un moule pour injection qui est au moins en deux parties et que, à cet effet, on dispose un morceau de film ou de feuille dans le moule puis on forme autour de ce morceau de film ou de feuille, par surmoulage par injection dans le moule, le corps moulé (2) conférant la structure.

5. Procédé selon une des revendications 1 à 4, caractérisé en ce que, avant la disposition du morceau de film ou de feuille dans le moule pour injection, on lui donne la forme requise.

6. Procédé selon une des revendications 1 à 5, caractérisé en ce qu'on produit le corps moulé d'un matériau transformable à l'état thermoplastique, qui est biodégrable et/ou apte au compostage, en particulier de plastique, ou d'un mélange de matériaux enrichi par des charges biodégradables et/ou aptes au compostage, en particulier d'un matériau plastique enrichi par de telles charges.

7. Procédé selon une des revendications 1 à 6, caractérisé en ce qu'on produit le film (7) en particulier d'un matériau plastique biodégrable ou apte au compostage, ou on produit la couche mince d'un matériau thermoplastique transformable par une technique de moulage par injection ou de matériau thermoplastique en feuille.

8. Objet usuel ou de consommation courante, pouvant être fabriqué par le procédé selon une des revendications 1 à 7, qui comprend au moins un corps moulé (2), conférant la structure, en forme de treillis et pouvant être chargé mécaniquement, qui est fait d'un matériau ou d'un mélange de matériaux essentiellement biodégrable et/ou apte au compostage, le ou les corps moulés (2) en forme de treillis étant relié(s) à au moins un film (7) ou une couche mince d'un matériau ou d'un mélange de matériaux qui est également au moins essentiellement biodégradable et/ou apte au compostage, le film (7) ou la couche mince complétant le ou les corps moulés (2) en créant avec lui ou eux la forme désirée de l'objet usuel ou de consommation courante (1).
